# EUROPÄISCHE PATENTANMELDUNG

(11) **EP 2 146 497 A1**
(43) Veröffentlichungstag der Anmeldung: **20.01.2010**
(21) Anmeldenummer: 09166801.2
(22) Anmeldetag: 06.03.2006
(51) Int. Cl.: H04N 1/191, H04N 1/047

(54) **System zur Ausbildung von Rasterpunkten**

(30) Priorität: 11.03.2005 DE 102005011312
(62) Teilanmeldung aus: 06110724.9
(71) Anmelder: Koenig & Bauer AG, 97080 Würzburg (DE)
(72) Erfinder: Diederichs, Carsten, 32657, Lemgo (DE)

(57) **Zusammenfassung**

Die Erfindung betrifft ein System zur Ausbildung von Rasterpunkten (01), aufweisend ein Ausgabegerät (13) mit Ausgabeelementen (09) zur Ausbildung der Rasterpunkte (01) und eine Steuervorrichtung (16), wobei das Ausgabegerät (13) die Rasterpunkte (01) auf einer Fläche (02) ausbildet, wobei das Ausgabegerät (13) die Rasterpunkte (01) auf der Fläche (02) an Positionen entlang von zueinander parallelen Rasterlinien (06) jeweils beginnend mit einer Startposition (04) ausbildet, wobei die Steuervorrichtung (16) die jeweiligen Positionen mehrerer entlang derselben Rasterlinie (06) auszubildender Rasterpunkte (01) vor deren Ausbildung berechnet, wobei die Steuervorrichtung (16) eine Länge mindestens einer der Rasterlinien (06) in Teilstrecken unterteilt, wobei das Ausgabegerät (13) nach einer voreingestellten Anzahl dieser Teilstrecken einen auf dieser Rasterlinie (06) auszubildenden Rasterpunkt (01) in einer stochastisch festgelegten Distanz (B) zu dessen berechneter Position ausbildet.

## Beschreibung

Die Erfindung betrifft ein System zur Ausbildung von Rasterpunkten gemäß dem Oberbegriff des Anspruchs 1.

In der Reproduktionstechnik sind Rasterverfahren bekannt, die entlang von Linien eines Gitternetzes Rasterpunkte in einer z. B. amplitudenmodulierten oder frequenzmodulierten Rasterung erzeugen, wobei die Rasterpunkte z. B. kreisförmig, quadratisch oder elliptisch geformt sein können. Bei einer amplitudenmodulierten Rasterung, die auch autotypische Rasterung genannt wird, haben die einzelnen Rasterpunkte jeweils den gleichen Abstand voneinander, jedoch unterscheiden sich die Rasterpunkte in der Größe ihrer jeweiligen, in der Rasterebene liegenden Fläche, wobei die unterschiedlichen Flächen je nach der verwendeten Rasterpunktform durch eine Variation des Durchmessers der Rasterpunkte hervorgerufen sein können. Bei der frequenzmodulierten Rasterung ist die Größe der Fläche der einzelnen Rasterpunkte gleich, jedoch haben die Rasterpunkte einen unterschiedlichen Abstand voneinander. Derartige Rasterverfahren sind z. B. in dem Fachbuch "Handbuch der Printmedien" von Helmut Kipphan, erschienen 2000 im Springer-Verlag, ISBN 3-540-66941-8, auf den Seiten 92 bis 102, 498, 499, 528 bis 532 und 540 beschrieben. Aus diesem Fachbuch ist auch bekannt, zur Vermeidung von Interferenz-Effekten, die durch eine Überlagerung periodischer Strukturen entstehen können, d. h. zur Vermeidung sogenannter Moire-Erscheinungen, beim Übereinanderdruck mehrerer jeweils aus Rasterstrukturen bestehender Farbauszüge die einzelnen am Gesamtbild beteiligten Rasterstrukturen jeweils unter einem Verdrehwinkel gegeneinander zu versetzen, wobei jede am Gesamtbild beteiligte Rasterstruktur einen Rasterwinkel aufweist, wobei der Rasterwinkel z. B. nach DIN 16547 (in der derzeit geltenden Ausgabe vom Dezember 1983) in einem Vollkreis ausgehend von einer vertikalen Stellung im Uhrzeigersinn gemessen wird.

Darüber hinaus ist aus der Patentliteratur folgendes bekannt:

Die DE 198 15 165 A1 beschreibt ein Verfahren zur Gravur von Druckformen, wobei zur Minimierung störender Moires mindestens ein Gravurraster gegenüber den anderen Gravurrastern eines Farbsatzes auf dem Druckzylinder versetzt graviert wird. Dabei kann vorgesehen sein, dass der Gravierbeginn zur Gravur des versetzten Gravurrasters um eine Vektorkomponente des Startvektors in Umfangsrichtung des Druckzylinders verzögert wird. Zu demselben Farbsatz gehörende, jedoch jeweils unterschiedliche Druckfarben druckende Druckformen weisen somit zueinander versetzte Gravurraster auf.

Die DE 101 16 250 A1 beschreibt ein Verfahren zur Durchführung einer Liniengravur mit wenigstens einem Gravierstichel zur Erstellung einer Druckform für den Tiefdruck. Dabei wird ein Abstand zweier einander benachbarter Gravurlinien bereichsweise nach der zu gravierenden Information oder des zu gravierenden Objektes ausgewählt und eingestellt wird. Damit ist der Abstand zweier einander benachbarter, auf derselben Druckform ausgebildeter Gravurlinien variabel.

Die DE 28 52 315 A1 beschreibt ein elektronisches Verfahren zur Herstellung von Rasterauszügen unter Verwendung von Rasterscannern, wobei zur Erzeugung unterschiedlicher Dichten unterschiedliche Punktabstände bei gleich bleibender Punktgröße verwendet werden, wobei Rasterweitensprünge variiert werden können.

Die DE 1 112 407 B beschreibt ein Rasterungsverfahren für die Herstellung eines Druckformensatzes für den Mehrfarbendruck, wobei die Rasterelemente zeitlich nacheinander punkt- und zeilenweise durch Gravierung oder Belichtung elektromechanisch oder elektrooptisch erzeugt werden, wobei Rastersorten verwendet werden, bei denen sich sowohl die Zeilenabstände (Vorschubschritte) in den verschiedenen Rastern eines Farbauszugsatzes zueinander als auch die Rasterpunktabstände innerhalb der Zeilen dieses Rastersatzes zueinander wie kleine ganze Zahlen, vorzugsweise 2, 3, 4, verhalten, und wobei die Anzahl der Rasterelemente pro Flächeneinheit bei allen Rastern eines Satzes annähernd erhalten bleibt. Es kann auch vorgesehen sein, dass ein Rastersatz verwendet wird, bei dem in wenigstens zwei Rastern die Rasterelemente einer Zeile auf Lücke in bezug auf die Rasterelemente der beiden Nachbarzeilen stehen. Dadurch wird bei übereinander zu druckenden Rastern der an diesem Mehrfarbendruck beteiligten Druckformen ein Moireeffekt möglichst vermieden.

Die DE 197 43 943 A1 betrifft eine Druckmaschine mit einem Formzylinder und mit einer Bebilderungsvorrichtung mit einem entlang der Mantelfläche des Formzylinders auf einer im wesentlichen zur Längsachse des Formzylinders parallelen Traversierachse traversierenden, von einer Antriebseinrichtung angetriebenen Druckkopf und mit einer Vorrichtung zur Korrektur von während des Traversierens auftretenden Fehlern bei der Bebilderung des Formzylinders, wobei auf dem Druckkopf ein Laser oder eine Anordnung von mehreren Lasern angeordnet sein kann. Ein Encoder erfasst eine Winkelposition des Formzylinders, wobei das Signal des Encoders für eine Phasenkorrektur herangezogen wird, wobei die Phasenkorrektur von der Bebilderungsvorrichtung auszubildende Bildpunkte betrifft.

Die DE 32 13 573 A1 betrifft ein Verfahren zum direkten Herstellen einer Halbtonplatte von einem Originalbild mit einer kontinuierlichen Abstufung zur Anwendung bei einer Bildreproduziermaschine, aufweisend folgende Verfahrensschritte: a) Es wird eine Halbton-Punktfläche in Bildelemente zerlegt, abhängig von einem Rasterwinkel. b) Die Adressenzahlen der Bildelemente der zerlegten Halbton-Punktflächen werden adressiert. c) Die Daten für die Halbton-Punktflächen-Raten und die Gestalten der Halbton-Punktmuster werden in Adressen von Speichern gespeichert. d) Es wird einer der Speicher ausgewählt. e) Die Daten aus dem ausgewählten Speicher werden parallel herausgelesen und f) die Belichtungs-Lichtstrahlen werden entsprechend geregelt, wobei mehrere Belichtungs-Lichtstrahlen mittels einer Linse auf einen gemeinsamen Auftreffpunkt auf einem lichtempfindlichen Material fokussiert sind.

Die DE 102 53 654 A1 betrifft ein Verfahren zum Herstellen von lösch- und wiederbebilderbaren Tiefdruckformen, bei dem ein mit einem Raster von definierten Vertiefungen und gleichmäßig hohen Stegen versehenes Substrat bereitgestellt wird und in den Vertiefungen zur Ausbildung eines Rasters von Näpfchen, die auf die Tonwerte der Druckvorlage abgestimmt sind, Strukturen aus mindestens einem wieder entfernbaren Bebilderungsmaterial erzeugt werden. Für die Tiefdruckformen sind verschiedene, auch stochastisch verteilte Vertiefungsraster wählbar.

Die US 5,535,672 A beschreibt ein Verfahren zur Druckformherstellung mittels eines Lasers, bei dem auf der Druckform in mehreren parallel nebeneinander angeordneten Spalten jeweils eine Reihe von parallelogrammförmigen Vertiefungen ausgebildet wird, bei dem in benachbarten Spalten ausgebildete Vertiefungen mit ihrer sich jeweils in Spaltenweite erstreckenden Kante nicht fluchtend, sondern jeweils zueinander versetzt ausgebildet werden.

Die US 5,767,887 A betrifft ein System zum Plotten eines mehrfarbigen grafischen Bildes, wobei mehrere Laser unterschiedlicher Lichtfarbe vorgesehen sind, wobei die Laser auf einem auf einer drehbaren Trommel angeordneten Bildträger durch eine Bündelung ihrer jeweiligen Lichtstrahlen in einem in Axialrichtung der Trommel traversierenden Bebilderungskopf einen gemeinsamen Bildpunkt ausbilden, um das mehrfarbige Bild in einem einzigen Arbeitsgang zu erstellen.

Der Erfindung liegt die Aufgabe zugrunde, Systeme zur Ausbildung von Rasterpunkten zu schaffen, wobei Fehlpositionierungen von Rasterpunkten korrigierbar sind und/oder wobei Registerfehlern und/oder Moire-Erscheinungen entgegengewirkt wird.

Die Aufgabe wird erfindungsgemäß durch die Merkmale des Anspruchs 1 gelöst.

Die mit der Erfindung erzielbaren Vorteile bestehen insbesondere darin, dass durch die wahlfreie Festlegung der Startposition mindestens einer Rasterlinie einzeln und unabhängig von der Startposition einer anderen Rasterlinie ein beliebig konfigurierbares Gitternetz geschaffen wird, mit dem eine durch eine Relativbewegung zwischen den Ausgabeelementen und der Fläche verursachte Verzerrung von auf einer Fläche auszubildenden Rasterpunkten entzerrt und damit korrigiert werden kann. Insbesondere kann das vorgeschlagene System zur Ausbildung von Rasterpunkten bei der Ausführung eines bildgebenden Bearbeitungsverfahrens parallelogrammförmige oder trapezförmige Verzerrungen eines rechteckförmigen Flächenstücks korrigieren sowie Registerfehler, insbesondere Farbregisterfehler, und/oder Moire-Erscheinungen im Mehrfarbendruck vermeiden. Die Vermeidung dieser Fehler führt z. B. bei einem herzustellenden Druckerzeugnis zu einer Unterdrückung unerwünschter Farbschwankungen und damit zu einer besseren Qualität. Registerfehlern und/oder Moire-Erscheinungen wird auch dadurch in vorteilhafter Weise entgegengewirkt, dass Rasterpunkte entlang einer Rasterlinie in parametrierbaren Abständen anordenbar sind oder dass mindestens ein an einer berechneten Position auf der Rasterlinie auszubildenden Rasterpunkt in einer stochastisch festgelegten Distanz zu der berechneten Position ausgebildet wird.

Ausführungsbeispiele der Erfindung sind in den Zeichnungen dargestellt und werden im Folgenden näher beschrieben.

Es zeigen:
- Fig. 1: eine Fläche mit darauf auszubildenden Rasterpunkten;
- Fig. 2: ein System zur Ausbildung von Rasterpunkten.

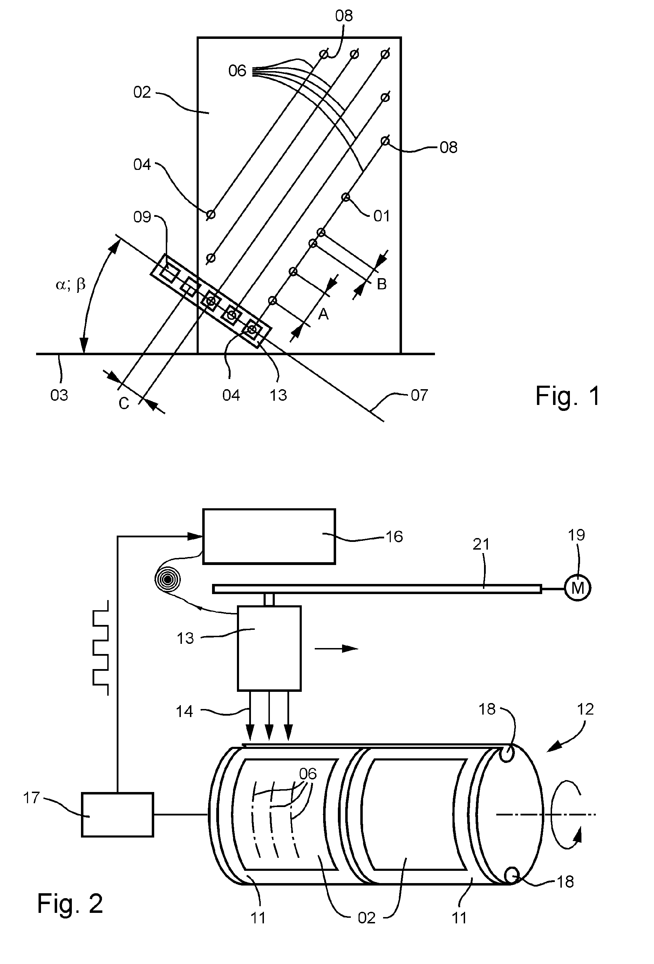

In der Fig. 1 ist beispielhaft und nur schematisch eine Fläche 02, hier eine ebene Fläche 02, mit mindestens einer geradlinigen Seitenbegrenzung 03 dargestellt, wobei die Fläche 02 als ein Träger darauf auszubildender Rasterpunkte 01 dient. Die Fläche 02 kann auch gewölbt ausgebildet sein; sie kann insbesondere hinsichtlich ihrer orthogonal zur geradlinigen Seitenbegrenzung 03 gerichteten Erstreckung konkav oder konvex ausgebildet sein. Die Fläche 02 ist vorzugsweise rechteckförmig ausgebildet. Auf dieser Fläche 02 sind Rasterpunkte 01 entlang mehrerer zueinander parallelen Rasterlinien 06 auszubilden, wobei entlang vorzugsweise jeder Rasterlinie 06 jeweils vorzugsweise mehrere Rasterpunkte 01 auszubilden sind. Die auf der Fläche 02 auszubildenden Rasterpunkte 01 können in ihrer Gesamtheit jede beliebige Konfiguration annehmen und auf der Fläche 02 ungleichmäßig verteilt sein. Unter dem Begriff der Rasterung wird die Ausbildung von Rasterpunkten 01 in einer gitternetzförmigen Struktur verstanden.

Die Rasterpunkte 01 werden jeweils von einem System zur Ausbildung von Rasterpunkten 01 auf der Fläche 02 ausgebildet. Das System zur Ausbildung von Rasterpunkten 01 kann z. B. ein Lasersystem, ein Inkjetsystem, ein unter Ausnutzung eines lichthydraulischen Effektes Rasterpunkte 01 ausbildendes System, ein Belichter zur Belichtung von Druckformen oder ein beliebiges anderes Rasterpunkte 01 ausbildendes System sein, wobei das System zur Ausbildung von Rasterpunkten 01 ein bildgebendes Bearbeitungsverfahren ausführt, wobei das Bearbeitungsverfahren hinsichtlich der Fläche 02 vorzugsweise berührungslos, d. h. ohne direkten Kontakt mit der Fläche 02 arbeitet.

In der bevorzugten Ausführung ist das System zur Ausbildung von Rasterpunkten 01, wie in der Fig. 2 schematisch dargestellt, als ein Bebilderungssystem zur Bebilderung einer Fläche 02 auf einer Druckform 11 ausgebildet, insbesondere zur Bebilderung einer Fläche 02 einer auf der Mantelfläche eines Formzylinders 12 einer Druckmaschine angeordneten Druckform 11. Die Druckmaschine arbeitet z. B. in einem Flachdruckverfahren, insbesondere in einem Offsetdruckverfahren. In der Druckmaschine können mehrere vorzugsweise gleichartige Systeme zur vorzugsweise gleichzeitigen Ausbildung von Rasterpunkten 01 auf voneinander verschiedenen Flächen 02 vorgesehen sein. Es kann vorgesehen sein, dass ein durch die Druckmaschine transportierter Bedruckstoff, z. B. eine Materialbahn oder ein Druckbogen, jeweils z. B. bestehend aus Papier, von mehreren Druckformen 11 bedruckt wird, wobei die mehreren Druckformen 11 den Bedruckstoff nacheinander zur Herstellung eines mehrfarbigen Druckbildes mit sich im Farbton voneinander unterscheidenden Druckfarben bedrucken und somit unterschiedlichen, aber zu demselben Druckbild gehörenden Farbauszügen zugeordnet sind. Im Fall eines derartigen Mehrfarbendrucks sind die jeweiligen Rasterungen der am Druckbild beteiligten Druckformen 11 aufeinander abzustimmen, um Registerfehler, insbesondere Farbfehler, und/oder Moire-Erscheinungen zu vermeiden.

In der vorgenannten bevorzugten Ausführung werden die Rasterpunkte 01 auf der dem Bebilderungssystem zugewandten Fläche 02 der vorzugsweise rechteckförmigen Druckform 11 ausgebildet, wobei die Fläche 02 entsprechend der zylindrischen Mantelfläche des die Druckform 11 tragenden Formzylinders 12 gewölbt ausgebildet ist. Die Druckform 11 ist vorzugsweise biegsam ausgebildet. Bei der Druckform 11 kann es sich auch um eine wiederbeschreibbar ausgebildete Druckform 11 handeln. Auf der Mantelfläche des Formzylinders 12 können sowohl in dessen Axialrichtung als auch in dessen Umfangsrichtung mehrere Druckformen 11 angeordnet sein, z. B. vier oder sechs Druckformen 11 nebeneinander in dessen Axialrichtung und z. B. zwei oder drei hintereinander in dessen Umfangsrichtung. Es kann auch vorgesehen sein, dass auf einer Druckform 11 mehrere, voneinander getrennte Druckbilder durch das Ausbilden von Rasterpunkten 01 auf diesen Druckbildern zugeordneten Flächen 02 auszubilden sind. Die Bebilderung kann innerhalb der Druckmaschine, aber auch außerhalb der Druckmaschine z. B. in einer eigens dafür vorgesehenen Vorrichtung, z. B. in einem Belichter, erfolgen.

Das System zur Ausbildung von Rasterpunkten 01 setzt sich aus mehreren Funktionseinheiten zusammen und weist u. a. einen der Fläche 02 zugewandten Bebilderungskopf 13 auf, wobei dieser Bebilderungskopf 13 zumindest in Axialrichtung des die zu bebildernde Druckform 11 tragenden Formzylinders 12 mittels eines dafür vorgesehenen steuerbaren Antriebs 19 bewegbar ist, wobei der Bebilderungskopf 13 vorzugsweise entlang einer axial zum Formzylinder 12 verlaufenden Traverse 21 verfahrbar ist, wobei der steuerbare Antrieb 19 z. B. als ein Schrittmotor ausgebildet ist.

Der Bebilderungskopf 13 ist z. B. als ein einen Partikelstrom 14 oder eine Welle 14, insbesondere eine elektromagnetische Welle, z. B. Laserlicht 14, emittierendes Ausgabegerät 13 ausgebildet, wobei der auf der Fläche 02 auftreffende Partikelstrom 14 oder die auf der Fläche 02 auftreffende Welle 14, z. B. das emittierte Laserlicht 14, an der Auftreffstelle auf der Fläche 02 z. B. durch ein Auftragen von mit dem Partikelstrom 14 zugeführtem Material oder durch ein Abtragen von Material der Fläche 02 oder durch ein Verändern des Materials der Fläche 02 in seinen optischen Eigenschaften einen Rasterpunkt 01 ausbildet. Die Auftreffstelle auf der Fläche 02 bildet z. B. einen sogenannten Laserspot aus.

Das System zur Ausbildung von Rasterpunkten 01 bildet mit seinem Ausgabegerät 13 die Rasterpunkte 01 in Abhängigkeit von einer Relativbewegung zwischen dem Ausgabegerät 13 und der Fläche 02 aus, wobei die Relativbewegung z. B. durch eine Rotationsbewegung des Formzylinders 12 in Verbindung mit einer vorzugsweise gleichzeitigen Vorschubbewegung des Ausgabegerätes 13 vorzugsweise in Axialrichtung des die zu bebildernde Druckform 11 tragenden Formzylinders 12 gegeben ist. Die Rotationsbewegung des Formzylinders 12 und die Vorschubbewegung des Ausgabegerätes 13 sind in der Fig. 2 durch entsprechende Pfeile angedeutet. Die Abhängigkeit zwischen der Relativbewegung und der Ausbildung von Rasterpunkten 01 besteht darin, dass Rasterpunkte 01 nur dort auf der Fläche 02 ausgebildet werden, wo z. B. das Ausgabegerät 13 mit einer Position auf der Fläche 02 korreliert, d. h. z. B. dort, wo das Ausgabegerät 13 insbesondere lotrecht oder radial beabstandet von der Fläche 02 angeordnet ist. Die Vorschubbewegung des Ausgabegerätes 13 in Axialrichtung des die zu bebildernde Druckform 11 tragenden Formzylinders 12 ist vorzugsweise gleichförmig und konstant.

Der Bebilderungskopf 13 oder das Ausgabegerät 13 weist in Axialrichtung des die zu bebildernde Druckform 11 tragenden Formzylinders 12 vorzugsweise mehrere parallel, d. h. insbesondere auch gleichzeitig arbeitende Kanäle auf (Fig. 1), wobei die Kanäle an ihrer der Fläche 02 zugewandten Seite in Ausgabeelemente 09 zur Ausbildung von Rasterpunkten 01 münden. So sind zur Ausbildung der Ausgabeelemente 09 in Axialrichtung des Formzylinders 12 nebeneinander z. B. mehrere während desselben Bewegungsvorganges jeweils Laserlicht 14 emittierende Austrittsstellen angeordnet, wobei die Ausgabeelemente 09 Laserlicht 14 vorzugsweise gepulst zur Verfügung stellen. Z. B. sind im Ausgabegerät 13 nebeneinander mehrere, z. B. vierzig Laserlicht 14 emittierende, auf die zu bebildernde Druckform 11 gerichtete Austrittsstellen vorgesehen, wobei die Lichtstrahlen des aus den Austrittsstellen austretenden Laserlichts 14 parallel verlaufen. Jede einzelne dieser Austrittsstellen kann z. B. eine die Lichtstrahlen des Laserlichts 14 formende, insbesondere bündelnde optische Einrichtung aufweisen. Die im Ausgabegerät 13 parallel arbeitenden Kanäle können auch Laserlicht 14 leitende Lichtleiter aufweisen. Das Laserlicht 14 kann z. B. von einzelnen oder in einem Array angeordneten Laserdioden erzeugt sein, wobei die Laserdioden in ihrer Lichtemission mit einer zum System gehörenden Steuervorrichtung 16 einzeln und unabhängig voneinander steuerbar sind. Die aus den Austrittsstellen des Ausgabegerätes 13 austretenden Lichtstrahlen sind in Axialrichtung des Formzylinders 12 vorzugsweise in einem Abstand C im Bereich von deutlich weniger als 1 mm, z. B. in einem Abstand C von etwa 10 µm voneinander beabstandet. Dieses entspricht dem Abstand, in dem parallel verlaufende Rasterlinien 06 voneinander beabstandet sind. Die zum System gehörenden Steuervorrichtung 16 kann auch den Antrieb 19 zum Bewegen des Ausgabegerätes 13 steuern, d. h. dessen Vorschubgeschwindigkeit einstellen.

Die Rotationsbewegung des die zu bebildernde Druckform 11 tragenden Formzylinders 12 wird z. B. mit einem vorzugsweise hochauflösenden Encoder 17 erfasst, wobei der Encoder 17 entlang eines Vollkreises einer Messscheibe z. B. fünf tausend oder mehr Striche aufweist, wobei z. B. mit einer PLL-Schaltung (phase-locked loop), d. h. mit einem phasengekoppelten Regelkreis, aus den Signalen des Encoders 17 ein Taktsignal generiert wird, wobei aus dem Taktsignal z. B. bei Kenntnis des Durchmessers des Formzylinders 12 hinsichtlich auf der Fläche 02 auszubildender Rasterpunkte 01 in Umfangsrichtung des Formzylinders 12 eine Ortsposition bestimmbar ist. Der Durchmesser des die zu bebildernde Druckform 11 tragenden Formzylinders 12 beträgt vorzugsweise mehr als 1.000 mm, z. B. etwa 1.200 mm. Die Druckform 11 hat in Umfangsrichtung des Formzylinders 12 eine gestreckte Länge von z. B. etwa 500 mm bis 600 mm. Die PLL-Schaltung ist z. B. derart ausgelegt, dass mit ihr in Umfangsrichtung des Formzylinders 12 die Ortsposition auszubildender Rasterpunkte 01 mit einer Auflösung im Bereich von deutlich weniger als 1 mm, z. B. mit einer Auflösung von 10 µm, bestimmbar ist. Bei einer konstanten Rotationsbewegung des Formzylinders 12 ergibt sich für das Taktsignal eine konstante Frequenz, woraus sich eine gleich bleibende Distanz für die Ortsposition benachbarter, in Umfangsrichtung des Formzylinders 12 auszubildender Rasterpunkte 01 ergibt, wobei diese Distanz zwischen benachbarten Rasterpunkten 01 dem Maß der Auflösung entspricht. Der Encoder 17 weist einen Nullimpuls auf, mit dem das mit dem Encoder 17 generierbare Taktsignal zu einer Absolutposition am Umfang des Formzylinders 12 in Beziehung gesetzt wird. Die Steuervorrichtung 16 des Systems ermittelt damit die Absolutposition von mindestens einem auf der Fläche 02 auszubildenden Rasterpunkt 01, wobei weitere auf der Fläche 02 auszubildende Rasterpunkte 01 relativ zu dieser Absolutposition berechenbar sind. Mit dem Nullsignal sind die Rotationsbewegung des die zu bebildernde Druckform 11 tragenden Formzylinders 12 und das mit dem Encoder 17 generierbare Taktsignal miteinander synchronisierbar. Die Absolutposition am Umfang des Formzylinders 12 kann z. B. durch einen bestimmten im Formzylinder 12 angeordneten, in Axialrichtung des Formzylinders 12 verlaufenden und zumindest ein Ende der zu bebildernden Druckform 11 haltenden Spannkanal 18 gegeben sein, wobei in Umfangsrichtung des Formzylinders 12 auch mehrere Spannkanäle 18 vorgesehen sein können.

Bei der bevorzugten Ausbildung des Ausgabegerätes 13 mit mehreren parallel arbeitenden Kanälen in Axialrichtung des die zu bebildernde Druckform 11 tragenden Formzylinders 12 sowie der Rotationsbewegung des die zu bebildernde Druckform 11 tragenden Formzylinders 12 und der Vorschubbewegung des Ausgabegerätes 13 in Axialrichtung des die zu bebildernde Druckform 11 tragenden Formzylinders 12 bildet das Ausgabegerät 13 auf der Fläche 02 der zu bebildernden Druckform 11 dort entlang von Rasterlinien 06 auszubildende Rasterpunkte 01 entlang einer mehrgängigen, in diesem Fall zylindrischen Schraubenlinie aus, wobei die Anzahl der Gänge der Schraubenlinie der Anzahl der aktivierten Kanäle des Ausgabegerätes 13 entspricht. Diese Relativbewegung zwischen dem Ausgabegerät 13 und der Fläche 02 besteht infolge der Rotationsbewegung des Formzylinders 12 in mehreren sich periodisch wiederholenden Bewegungsvorgängen, da sich die Fläche 02 bei jeder Umdrehung des Formzylinders 12 unter dem nicht mitrotierenden Ausgabegerät 13 hindurchbewegt, wobei das Ausgabegerät 13 mit jedem Bewegungsvorgang entsprechend der Anzahl der aktivierten Kanäle des Ausgabegerätes 13 auf der Fläche 02 Rasterpunkte 01 entlang einer festgelegten Anzahl von Rasterlinien 06 ausbildet. Die Relativbewegung zwischen dem Ausgabegerät 13 und der Fläche 02 weist infolge der Rotationsbewegung des Formzylinders 12 zumindest eine orthogonal zur geradlinigen Seitenbegrenzung 03 der Fläche 02 gerichtete Geschwindigkeitskomponente auf. Die Relativbewegung zwischen dem Ausgabegerät 13 und der Fläche 02 weist aufgrund der Vorschubbewegung des Ausgabegerätes 13 auch eine parallel zur geradlinigen Seitenbegrenzung 03 der Fläche 02 gerichtete Geschwindigkeitskomponente auf. Aufgrund der Vorschubbewegung des Ausgabegerätes 13 bilden die Rasterlinien 06 mit der geradlinigen Seitenbegrenzung 03 der Fläche 02 einen schiefwinkligen Rasterwinkel α aus.

Die z. B. als eine elektronische Rechenschaltung ausgebildete Steuervorrichtung 16 des Systems steuert u. a. den zeitlichen Ablauf zur Ausbildung von Rasterpunkten 01. Vorzugsweise in Abhängigkeit von dem mit der Rotationsbewegung des Formzylinders 12 korrelierenden Taktsignal des Encoders 17 und der sensorisch erfassten Vorschubbewegung des Ausgabegerätes 13 in Axialrichtung des Formzylinders 12 berechnet die Steuervorrichtung 16 des Systems z. B. mit einem Controller der Steuervorrichtung 16 die jeweiligen Positionen mehrerer auszubildender Rasterpunkte 01, vorzugsweise aller entlang derselben Rasterlinie 06 auszubildender Rasterpunkte 01. Die Steuervorrichtung 16 ist daher vorzugsweise durch Leitungen mit dem Encoder 17 und auch z. B. mit dem Antrieb zur Steuerung der Vorschubbewegung des Ausgabegerätes 13 in Axialrichtung des Formzylinders 12 verbunden.

Insbesondere berechnet diese Steuervorrichtung 16 eine Startposition 04, ab der eine Rasterlinie 06 mit Rasterpunkten 01 auszubilden ist, sodass die Startposition 04 eine Bezugsposition für entlang dieser Rasterlinie 06 nachfolgend auszubildende Rasterpunkte 01 bildet. Die Startposition 04 ergibt sich dort, wo aus einer der Austrittsstellen des Ausgabegerätes 13 austretendes Laserlicht 14 erstmals auf der sich relativ zum Ausgabegerät 13 bewegenden Fläche 02 auftreffen kann, d. h. nachdem z. B. die geradlinige Seitenbegrenzung 03 der Fläche 02 infolge der Rotationsbewegung des Formzylinders 12 die Auftreffstelle des aus der Austrittsstelle des Ausgabegerätes 13 austretenden Laserlichts 14 passiert hat und sich im Anschluss daran in Fortsetzung der Rotationsbewegung des Formzylinders 12 die mit Rasterpunkten 01 zu versehene Fläche 02 an der Austrittsstelle des aus dem Ausgabegerät 13 austretenden Laserlichts 14 entlangbewegt. Ähnliches ergibt sich für Startpositionen 04 von Rasterlinien 06, die erstmals durch die Vorschubbewegung des Ausgabegerätes 13 in Axialrichtung des Formzylinders 12 mit der zu bebildernden Fläche 02 in Deckung gebracht werden.

Im Ausgabegerät 13 sind die Ausgabeelemente 09 des Systems zur Ausbildung von Rasterpunkten 01 vorzugsweise in einer starren Verbauung nebeneinander entlang einer Geraden 07 angeordnet (Fig. 1), wobei die Gerade 07 zu der geradlinigen Seitenbegrenzung 03 der Fläche 02 in einer zu der Fläche 02 parallelen Ebene einen schiefwinkligen Verdrehwinkel β ausbildet, wobei der Verdrehwinkel β vorzugsweise dem Rasterwinkel α entspricht. Der Rasterwinkel α und/oder der Verdrehwinkel β sind jeweils zumindest von der in Richtung der parallel zur geradlinigen Seitenbegrenzung 03 der Fläche 02 gerichteten Geschwindigkeitskomponente abhängig. Die Steuervorrichtung 16 des Systems berechnet die jeweiligen Positionen von entlang derselben Rasterlinie 06 auszubildenden Rasterpunkten 01 z. B. in Abhängigkeit vom Rasterwinkel α und/oder vom Verdrehwinkel β. Vorzugsweise berechnet die Steuervorrichtung 16 des Systems die jeweiligen Positionen von entlang derselben Rasterlinie 06 auszubildenden Rasterpunkten 01 nach jeder Änderung des Rasterwinkels α und/oder des Verdrehwinkels β neu.

Die Steuervorrichtung 16 wählt die Startpositionen 04 von Rasterlinien 06 in Abhängigkeit der Relativbewegung zwischen dem Ausgabegerät 13 und der Fläche 02 und steuert die im Ausgabegerät 13 angeordneten Ausgabeelemente 09 zur Ausbildung von Rasterpunkten 01, z. B. die Laserdioden, insbesondere beim Übereinanderdruckder Rasterungen verschiedener am selben Druckbild beteiligter Farbauszüge zur Vermeidung von Registerfehler, insbesondere Farbfehler, und/oder Moire-Erscheinungen derart, dass bei einer wiederholten Umdrehung des Formzylinders 12, vorzugsweise bei jeder Umdrehung des Formzylinders 12 die Startposition 04 mindestens einer Rasterlinie 06 im Vergleich zu der Startposition 04 einer anderen Rasterlinie 06 mit Bezug auf die geradlinige Seitenbegrenzung 03 der Fläche 02 versetzt ist. Im Fall mehrerer nebeneinander angeordneter Ausgabeelemente 09, z. B. Laserdioden, im Ausgabegerät 13 legt die Steuervorrichtung 16 mindestens für eine Rasterlinie 06, vorzugsweise für jede Rasterlinie 06 deren Startposition 04 einzeln und vorzugsweise unabhängig von der Startposition 04 einer anderen Rasterlinie 06 fest, sodass mehrere nebeneinander angeordnete Ausgabeelemente 09 während desselben Bewegungsvorganges zu unterschiedlichen Zeitpunkten mit der Ausbildung von Rasterpunkten 01 auf der Fläche 02 beginnen. Beginnend mit der den Anfang einer Rasterlinie 06 definierenden Startposition 04 werden nachfolgend Rasterpunkte 01 entlang dieser Rasterlinie 06 ausgebildet, wobei die Startposition 04 einen Bezugspunkt für die nachfolgend entlang dieser Rasterlinie 06 auszubildenden Rasterpunkte 01 bildet. Es ist vorteilhaft, das die Steuervorrichtung 16 des Systems die jeweiligen Positionen aller entlang derselben Rasterlinie 06 auszubildenden Rasterpunkte 01 berechnet. In jedem Bewegungsvorgang können durch die mehreren nebeneinander angeordneten Ausgabeelemente 09 gleichzeitig Rasterpunkte 01 entlang mehrerer zueinander parallel verlaufender Rasterlinien 06 auf derselben Fläche 02 ausgebildet werden, wobei die Ausbildung der Rasterpunkte 01 entlang jeder Rasterlinie 06 von der Steuervorrichtung 16 des Systems individuell gesteuert sein kann.

Die Steuervorrichtung 16 des Systems unterteilt einen Abstand A zwischen den Positionen benachbarter, entlang derselben Rasterlinie 06 auszubildender Rasterpunkte 01 in eine endliche Anzahl von Teilstrecken. Vorzugsweise unterteilt die Steuervorrichtung 16 des Systems die jeweiligen Abstände A zwischen den Positionen benachbarter Rasterpunkte 01 aller entlang derselben Rasterlinie 06 auszubildenden Rasterpunkte 01 in dieselbe Anzahl von Teilstrecken. Dabei sind die den Abstand A zwischen den Positionen benachbarter Rasterpunkte 01 unterteilenden Teilstrecken vorzugsweise äquidistant. Die Steuervorrichtung 16 des Systems verändert den Abstand A zwischen den Positionen benachbarter Rasterpunkte 01, um einer unerwünschten Verzerrung von auf einer Fläche 02 auszubildenden Rasterpunkten 01 und/oder Registerfehlern und/oder Moire-Erscheinungen entgegenzuwirken, indem sie wahlweise diesen Abstand A durch ein Hinzufügen von mindestens einer weiteren Teilstrecke zu den bereits vorhandenen Teilstrecken vergrößert oder diesen Abstand A durch ein Weglassen von mindestens einer Teilstrecke von den vorhandenen Teilstrecken verkleinert.

Die Steuervorrichtung 16 des Systems erzeugt eine Länge der Teilstrecken, die den Abstand A zwischen den Positionen benachbarter, entlang derselben Rasterlinie 06 auszubildender Rasterpunkte 01 unterteilen, z. B. aus einem mit einer orthogonal zur geradlinigen Seitenbegrenzung 03 der Fläche 02 gerichteten Geschwindigkeitskomponente des Bewegungsvorgangs korrelierenden Signal, insbesondere aus dem mit dem Encoder 17 generierbaren Taktsignal, wobei dieses Taktsignal vorzugsweise aus sich periodisch wiederholenden Impulsen besteht, wobei z. B. bei jeder Umdrehung des Formzylinders 12 eine Vielzahl von Impulsen erzeugt werden. Die Zahl der Impulse pro Umdrehung des Formzylinders 12 liegt vorzugsweise bei mehreren Millionen Impulsen, z. B. bei mehr als zehn Millionen Impulsen, sodass bereits nach einer Drehung des Formzylinders 12 um ein winziges, im Nanometerbereich liegendes Bogenstück entlang seines Umfangs vom Encoder 17 ein Impuls generiert wird. Eine Folge von aufeinanderfolgenden Impulsen wird mit einem digitalen Zähler, insbesondere mit einem hochauflösenden Zähler, bis zu einem vorbestimmten, d. h. voreingestellten, vorzugsweise parametrierbaren Wert aufsummiert, wobei die Summe der bis zu diesem Wert aufgelaufenen Impulse eine auch Digit genannte Einheit bildet, wobei jeder auf diese Weise gebildete Digit mit einer den Abstand A zwischen den Positionen benachbarter, entlang derselben Rasterlinie 06 auszubildender Rasterpunkte 01 unterteilenden Teilstrecke korreliert. Die Länge dieser einzelnen Teilstrecken kann z. B. 100 nm oder weniger betragen. Durch ein Inkrementieren oder Dekrementieren um ein Digit verlängert oder verkürzt die Steuervorrichtung 16 des Systems den Abstand A zwischen den Positionen benachbarter, entlang derselben Rasterlinie 06 auszubildender Rasterpunkte 01 jeweils um eine dieser Teilstrecken.

Damit ist der Abstand A zwischen den Positionen benachbarter, entlang derselben Rasterlinie 06 auszubildender Rasterpunkte 01 parametrierbar und in weiten Grenzen festlegbar sowie veränderbar. Durch die Veränderbarkeit des Abstandes A zwischen den Positionen benachbarter, entlang derselben Rasterlinie 06 auszubildender Rasterpunkte 01 kann die Steuervorrichtung 16 des Systems andernfalls ohne diese Maßnahme am herzustellenden Druckerzeugnis sichtbar werdende Registerfehler, insbesondere Farbfehler, und/oder Moire-Erscheinungen korrigieren. Die Steuervorrichtung 16 des Systems ermittelt vorzugsweise auch eine Endposition 08 mindestens einer, vorzugsweise jeder Rasterlinie 06, d. h. diejenige Position, an der die Ausbildung von Rasterpunkten 01 entlang dieser Rasterlinie 06 endet, sodass mit einer Festlegung von Startposition 04 und Endposition 08 einer Rasterlinie 06 diese Rasterlinie 06 als eine gerade oder gewölbte Linie mit einer definierten Länge festgelegt ist. Eine Veränderung des Abstandes A zwischen den Positionen benachbarter, entlang derselben Rasterlinie 06 auszubildender Rasterpunkte 01 beeinflusst vorzugsweise auch die Startposition 04 und/oder die Endposition 08 dieser Rasterlinie 06, d. h. die Länge dieser Rasterlinie 06 wird je nach dem Vorzeichen der Veränderung des Abstandes A gedehnt oder gestaucht.

Das System zur Ausbildung von Rasterpunkten 01 ist mit der Steuervorrichtung 16 des Systems in der Lage, einen mit einer Startposition 04 einer Rasterlinie 06 korrelierenden Rasterpunkt 01 im Vergleich zu dem mit der Startposition 04 einer anderen Rasterlinie 06 korrelierenden Rasterpunkt 01 zeitlich oder um eine Strecke versetzt auszubilden. Dabei kann das System den mit der Startposition 04 einer Rasterlinie 06 korrelierenden Rasterpunkt 01 im Vergleich zu dem mit der Startposition 04 der anderen Rasterlinie 06 korrelierenden Rasterpunkt 01 zeitlich voreilend oder nacheilend ausbilden. Alternativ oder zusätzlich kann das System den mit der Startposition 04 einer Rasterlinie 06 korrelierenden Rasterpunkt 01, der im Vergleich zu dem mit der Startposition 04 einer anderen Rasterlinie 06 korrelierenden Rasterpunkt 01 versetzt auszubilden ist, ausgehend von der Startposition 04 des auszubildenden Rasterpunktes 01 um die vorgenannte Strecke versetzt ausbilden, wobei die Strecke den Abstand A zwischen der Startposition 04 des auszubildenden Rasterpunktes 01 und einer Position eines entlang dieser Rasterlinie 06 nachfolgenden Rasterpunktes 01 verkürzt oder verlängert. Dabei besteht die Strecke, die den Abstand A zwischen der Startposition 04 des auszubildenden Rasterpunktes 01 und einer Position eines entlang dieser Rasterlinie 06 nachfolgenden Rasterpunktes 01 verkürzt oder verlängert, vorzugsweise aus einer Anzahl von den Abstand A zwischen den Positionen benachbarter Rasterpunkte 01 unterteilenden Teilstrecken.

In einer vorteilhaften Ausführung des gefundenen Systems zur Ausbildung von Rasterpunkten 01 bildet das System mindestens einen an einer berechneten Position auf der Rasterlinie 06 auszubildenden Rasterpunkt 01 in einer stochastisch festgelegten Distanz B zu der berechneten Position aus. Dabei bildet das System den an der berechneten Position auf der Rasterlinie 06 auszubildenden Rasterpunkt 01 ausgehend von dessen berechneter Position in der stochastisch festgelegten Distanz B entlang der Rasterlinie 06 voreilend oder nacheilend aus, wobei die Generierung der stochastisch festgelegten Distanz B vorzugsweise die Ausbildung einer Vorzugsrichtung vermeidet. Ein Maximalwert der stochastisch festgelegten Distanz B beträgt vorzugsweise höchstens ein Drittel des Abstandes A zwischen den berechneten Positionen entlang der Rasterlinie 06 benachbarter Rasterpunkte 01. Die Steuervorrichtung 16 des Systems ermittelt die stochastisch festgelegte Distanz B in ihrer Länge und/oder ihrer Richtung z. B. mit einem Zufallsgenerator. Wenn der Steuervorrichtung 16 des Systems die Länge mindestens einer Rasterlinie 06 bekannt ist, z. B. dadurch, dass die Steuervorrichtung 16 des Systems aus der jeweils berechneten Startposition 04 und Endposition 08 dieser Rasterlinie 06 deren Länge ermittelt, kann die Steuervorrichtung 16 des Systems diese Länge der Rasterlinie 06 vorzugsweise gleichmäßig, z. B. in äquidistante Teilstrecken unterteilen und nach jeder dieser Teilstrecken oder sich wiederholend nach einer bestimmten, vorzugsweise voreingestellten Anzahl dieser Teilstrecken einen auf dieser Rasterlinie 06 auszubildenden Rasterpunkt 01 in der stochastisch festgelegten Distanz B zu dessen berechneter Position ausbilden.

Die Steuervorrichtung 16 des Systems kann in einem zur Druckmaschine gehörenden Leitstand implementiert sein. Ein Auftreten einer unerwünschten Verzerrung von auf einer Fläche 02 auszubildenden Rasterpunkten 01 und/oder eines Registerfehlers und/oder einer Moire-Erscheinung können jeweils mit einem sensorischen System, z. B. mit mindestens einem auf den von Rasterpunkten 01 der Fläche 02 bedruckten Bedruckstoff gerichteten, vorzugsweise in der Druckmaschine angeordneten Bildsensor, z. B. einer Kamera mit mindestens einem CCD-Chip, insbesondere einer derartigen Farbkamera, in Verbindung mit einer Signale des Bildsensors auswertenden Bildauswertevorrichtung erfasst und ausgewertet werden, wobei ein Auswerteergebnis der Bildauswertevorrichtung an die Steuervorrichtung 16 des Systems zur Ausbildung von Rasterpunkten 01 geleitet wird. Auf diese Weise entsteht ein Regelkreis, in welchem die Steuervorrichtung 16 des Systems zur Ausbildung von Rasterpunkten 01 in Abhängigkeit von einer von der Bildauswertevorrichtung bereitgestellten Führungsgröße, nämlich dem Auswerteergebnis der Bildauswertevorrichtung, die Rasterung einer Fläche 02 nachführt.

### Bezugszeichenliste

- 01: Rasterpunkt
- 02: Fläche
- 03: Seitenbegrenzung
- 04: Startposition
- 05: -
- 06: Rasterlinie
- 07: Gerade
- 08: Endposition
- 09: Ausgabeelement
- 10: -
- 11: Druckform
- 12: Formzylinder
- 13: Bebilderungskopf, Ausgabegerät
- 14: Partikelstrom, Welle, Laserlicht
- 15: -
- 16: Steuervorrichtung
- 17: Encoder
- 18: Spannkanal
- 19: Antrieb
- 20: -
- 21: Traverse

- A: Abstand
- B: Distanz
- C: Abstand

- α: Rasterwinkel
- β: Verdrehwinkel

## Patentansprüche

1. System zur Ausbildung von Rasterpunkten (01), aufweisend ein Ausgabegerät (13) mit Ausgabeelementen (09) zur Ausbildung der Rasterpunkte (01) und eine Steuervorrichtung (16), wobei das Ausgabegerät (13) die Rasterpunkte (01) auf einer Fläche (02) ausbildet, wobei das Ausgabegerät (13) die Rasterpunkte (01) auf der Fläche (02) an Positionen entlang von zueinander parallelen Rasterlinien (06) jeweils beginnend mit einer Startposition (04) ausbildet, wobei die Steuervorrichtung (16) die jeweiligen Positionen mehrerer entlang derselben Rasterlinie (06) auszubildender Rasterpunkte (01) vor deren Ausbildung berechnet, **dadurch gekennzeichnet, dass** die Steuervorrichtung (16) eine Länge mindestens einer der Rasterlinien (06) in Teilstrecken unterteilt, wobei das Ausgabegerät (13) nach einer voreingestellten Anzahl dieser Teilstrecken einen auf dieser Rasterlinie (06) auszubildenden Rasterpunkt (01) in einer stochastisch festgelegten Distanz (B) zu dessen berechneter Position ausbildet.

2. System nach Anspruch 1, **dadurch gekennzeichnet, dass** die Ausgabeelemente (09) entlang einer Geraden (07) angeordnet sind, wobei mehrere entlang der Geraden (07) angeordnete Ausgabeelemente (09) bei der Ausbildung von Rasterpunkten (01) auf der Fläche (02) parallel arbeiten.

3. System nach Anspruch 1, **dadurch gekennzeichnet, dass** die Steuervorrichtung (16) die Ausgabeelemente (09) einzeln und unabhängig voneinander steuert.

4. System nach Anspruch 1, **dadurch gekennzeichnet, dass** die Steuervorrichtung (16) die Startposition (04) mindestens einer Rasterlinie (06), entlang der eines der entlang der Geraden (07) angeordneten Ausgabeelemente (09) mindestens einen Rasterpunkt (01) ausbildet, einzeln und unabhängig von der Startposition (04) einer anderen Rasterlinie (06), entlang der ein anderes der entlang der Geraden (07) angeordneten Ausgabeelemente (09) mindestens einen Rasterpunkt (01) ausbildet, festlegt.

5. System nach Anspruch 1, **dadurch gekennzeichnet, dass** die Steuervorrichtung (16) die jeweiligen Positionen aller entlang derselben Rasterlinie (06) auszubildenden Rasterpunkte (01) berechnet.

6. System nach Anspruch 1, **dadurch gekennzeichnet, dass** die Steuervorrichtung (16) eine Absolutposition mindestens eines auf der Fläche (02) auszubildenden Rasterpunktes (01) ermittelt und weitere auf der Fläche (02) auszubildende Rasterpunkte (01) relativ zu der ermittelten Absolutposition berechnet.

7. System nach Anspruch 1, **dadurch gekennzeichnet, dass** die Steuervorrichtung (16) eine Endposition (08) mindestens einer Rasterlinie (06) ermittelt.

8. System nach Anspruch 7, **dadurch gekennzeichnet, dass** die Steuervorrichtung (16) durch eine Veränderung des Abstandes (A) zwischen den Positionen benachbarter, entlang derselben Rasterlinie (06) auszubildender Rasterpunkte (01) die Startposition (04) und/oder die Endposition (08) mindestens einer Rasterlinie (06) verändert.

9. System nach Anspruch 1, **dadurch gekennzeichnet, dass** das Ausgabegerät (13) einen mit einer Startposition (04) einer Rasterlinie (06) korrelierenden Rasterpunkt (01) im Vergleich zu dem mit der Startposition (04) einer anderen Rasterlinie (06) korrelierenden Rasterpunkt (01) zeitlich oder um eine Strecke versetzt ausbildet.

10. System nach Anspruch 1, **dadurch gekennzeichnet, dass** das Ausgabegerät (13) den an der berechneten Position auf der Rasterlinie (06) auszubildenden Rasterpunkt (01) ausgehend von dessen berechneter Position in der stochastisch festgelegten Distanz (B) entlang der Rasterlinie (06) voreilend oder nacheilend ausbildet.

11. System nach Anspruch 1, **dadurch gekennzeichnet, dass** ein Maximalwert der stochastisch festgelegten Distanz (B) höchstens ein Drittel des Abstandes (A) zwischen den berechneten Positionen entlang der Rasterlinie (06) benachbarter Rasterpunkte (01) beträgt.

12. System nach Anspruch 1, **dadurch gekennzeichnet, dass** die Steuervorrichtung (16) die stochastisch festgelegte Distanz (B) mit einem Zufallsgenerator ermittelt.

13. System nach Anspruch 1, **dadurch gekennzeichnet, dass** mindestens ein Bildsensor mit einer Signale dieses Bildsensors auswertenden Bildauswertevorrichtung vorgesehen sind, wobei der Bildsensor ein Auftreten einer unerwünschten Verzerrung von auf der Fläche (02) auszubildenden Rasterpunkten (01) und/oder eines Registerfehlers und/oder einer Moire-Erscheinung erfasst, wobei die Bildauswertevorrichtung und die Steuervorrichtung (16) einen Regelkreis ausbilden, in welchem die Steuervorrichtung (16) in Abhängigkeit von dem von der Bildauswertevorrichtung als eine Führungsgröße bereitgestellten Auswerteergebnis der Bildauswertevorrichtung die Rasterung der Fläche (02) nachführt.

14. System nach Anspruch 1, **dadurch gekennzeichnet, dass** die Steuervorrichtung (16) aus der Startposition (04) und einer Endposition (08) einer Rasterlinie (06) deren Länge ermittelt.

15. System nach Anspruch 1, **dadurch gekennzeichnet, dass** die Steuervorrichtung (16) die Länge mindestens einer Rasterlinie (06) in äquidistante Teilstrecken unterteilt, wobei die Steuervorrichtung (16) nach jeder dieser Teilstrecken oder sich wiederholend nach einer bestimmten Anzahl dieser Teilstrecken einen auf der Rasterlinie (06) auszubildenden Rasterpunkt (01) in der stochastisch festgelegten Distanz (B) zu dessen berechneter Position ausbildet.
